# EUROPEAN PATENT SPECIFICATION

(11) **EP 2 342 386 B1**
(45) Date of publication and mention of the grant of the patent: **12.08.2015**
(21) Application number: 09738435.8
(22) Date of filing: 01.05.2009
(51) Int. Cl.: E03B 3/02

(54) **RAINWATER HARVESTING SYSTEM**
SYSTEM ZUM GEWINNEN VON REGENWASSER
SYSTÈME DE COLLECTE D'EAU DE PLUIE

(30) Priority: 02.05.2008 GB 0808050
(43) Date of publication of application: 13.07.2011
(73) Proprietor: O'Driscoll, Nigel, Slough Berkshire SL2 3RH (GB)
(72) Inventor: O'Driscoll, Nigel, Slough Berkshire SL2 3RH (GB)
(74) Representative: Rutt, Jason Edward
(86) International application number: PCT/GB2009/050453
(87) International publication number: WO 2009/133405

(56) References cited:
- EP-A- 1 002 905
- GB-A- 2 235 719
- GB-A- 2 286 849
- US-A- 3 730 120

## Description

### Technical field

This invention relates to water conservation and in particular to a system used to harvest rain water that can be used to supplement the mains water supply for non-hygienic water use, for example flushing toilets.

### Background art

Rainwater harvesting systems are commonly used to reduce the amount of clean mains supplied water that is unnecessarily used for purposes that do not require water of such a high quality, such as irrigation or flushing toilets.

Often these systems will have been built into the structure of the house at great expense when it was first built, as can be seen in prior art US 6,357,183 or US 6,553,723. This method is not only costly, but also difficult to implement to any existing structures.

Other systems that have been designed to overcome this, such as in prior art GB 2,235,719, have large to medium-sized storage tanks or cisterns which are often plainly visible at ground level or below the eves of the roof. This is unsightly to look at and strengthening of the roof and guttering could be required to withstand the weight of the tank. If the storage tank is at ground level or even subterranean then the energy required to pump the water up to where it is required can be large in order to overcome the effects of gravity. The system shown in GB2235719 discloses the features of the preamble of claim 1 and includes a submersible pump in the/each cistern to pump water to a reservoir tank in the roof space of the building. This document is considered to be the prior art closest to the invention.

Other examples of similar systems can be found in US 2005/045228, US 2004/040598, EP1002905 and WO 2004 020748.

Therefore it is the object of the invention to provide a system for harvesting and storing rainwater from more numerous yet smaller and unobtrusive collectors that can be installed at relatively low expense and in particular that also can be incorporated into an existing rain gutter system by making only minor modifications.

### Disclosure of the invention

A system for harvesting the rainwater collected from the roof of a building, comprising:
a number of rainwater collectors connected to a guttering attached to the roof, wherein a rainwater collector comprises a sensor for detecting when a predetermined level of rainwater has been collected; a storage tank; and a feed system connecting the rainwater collectors to the storage tank; wherein the feed system comprises a common pumping system connected to the collectors; and the feed system comprises means for operating the common pumping system so as to transfer water from the collectors to the storage tank, characterised in that each rainwater collector comprises a sensor for detecting when a predetermined level of rainwater has been collected and water is transferred from the collectors to the storage tank only while the amount of water in each of the collectors is greater than or equal to the predetermined level.

Preferably the rainwater collectors are installed on gutter downpipes. Each collector can comprise a sump extending below the connection point of the down pipe to the gutter, the sensor of the feed system being located in the sump.

The storage tank is preferably located in the building at a level close to that of the guttering, for example in a roof space.

The common pumping system typically comprises a single pump and optionally a filter. A manifold can be provided, typically upstream of the pumping system, in which the water transferred from all of the collectors is combined before being passed to the storage tank.

Flow control valves for each of the collectors' outputs can be incorporated into the common pumping system and in a preferred embodiment they are installed on the input to the manifold. A non-return valve and a strainer can also be provided in each collector.

In a particularly preferred embodiment, the feed system comprises a central control computer which receives signals from the sensors in the rainwater collectors and operates the common pumping system in accordance with the received signals. Preferably a time delay for the turning on or off of the pump can be incorporated into the feed system by either the central control computer or the sensors themselves.

The storage tank can comprise sensors which operate to send a signal to the feed system to stop transfer of water when the storage tank is full. It can further comprise a low level ball cock to supply water from the mains supply when the level in the storage tank drops below that required.

Further aspects of the invention will be apparent from the following description.

### Brief description of the drawings

Figure 1 shows a schematic diagram of a system according to an embodiment of the invention installed in a building; and
Figure 2 shows a cross section through a water collector used in the embodiment of Figure 1.

### Mode(s) for carrying out the invention

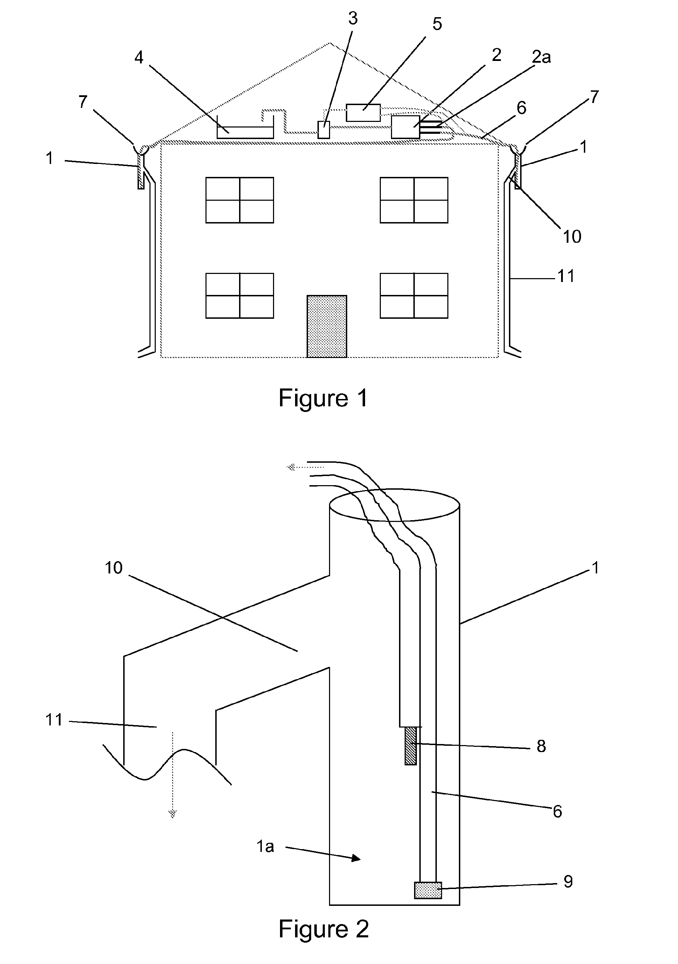

With reference to figures 1 and 2, a number of rainwater collectors 1 are integrated into existing guttering 7 on a building. The collector 1 comprises a sump 1a extending below the connection point 10 of a downpipe 11 to the gutter 7. Sensors 8 are installed inside the sump 1a and a dual core hose 6 supplies them with an electric supply whilst at the same time providing the means by which water can be pumped out of the collector through a strainer and a non-return valve 9 on the end of the water hose.

A storage tank 4 is located in the roof space of the building for receiving the collected rainwater. It is fed by a feed system connected to the collectors 1 which includes a common pump 3 which is controlled by a central control computer 5. The central control computer 5 is provided with signals from the sensors 8 in each of the rainwater collectors 1. The hose 6 from each rainwater collector 1 is connected to a manifold 2 that accumulates the rainwater from each rainwater collector 1 before the pump 3 draws it into the storage tank 4. Flow control valves 2a are situated at the inputs to the manifold.

When the sensors 8 in all of the collectors 1 are reporting that the level of water is greater than a predetermined level, the central control computer 5 turns the pump 3 on and the water starts to be drawn out of each collector, through the manifold 2, into a filter and then ultimately the storage tank 4.

When the pump is on, the system is configured such that the rate of flow out of each rainwater collector will be less than the rate that rainwater is pouring into the collection chamber form the gutter 7 in common rain conditions. If the rate that the water is being pumped out is more than that of new rainwater pouring in, then the water level in the collector will drop below the sensor 8 and the central control computer 5 will turn the pump 3 off. If, however, the rate that the water is being pumped out is less than that of new rainwater pouring in, then the water level in the collector will rise and eventually will overflow down the overflow pipe 10 into the rainwater downpipe 11 and be disposed of in the usual way. In this way, the situation in which the water level in one collector drops below the end of the hose 6 which then starts to draw air and creates an air lock in the pump is avoided. This can be particularly important when the rainfall is light or when rainfall ceases.

It is preferred that a time delay is incorporated into the pumping system by either the central control computer or the sensors themselves such that the pump will only turn on a short period after every sensor has registered a full collector, for example after a 10 second delay. This will ensure that the pump is switched on only when the collector is full, and not when the sensor just gets wet, perhaps by a splash. In a similar way, a time delay can be incorporated after a sensor has registered that a collector is empty so that the pump continues to extract the rainwater for example for another 6 seconds, thus ensuring that the collector is pumped empty and not just to the level that the sensor is positioned within the collector.

On the initial set up of the system, the flow control valves 2a are balanced so that collectors on smaller roof areas are pumped at a lesser rate than those on large roof areas, thus the rate that water is pumped out of each collector should be in proportion to the catchment area that supplies it and should prevent a continual turning on and off of the pump 3 that would occur if these collectors that fill up slower, emptied faster.

Sensors and float switches installed in the larger storage tank 4 will override any signals sent to the control computer 5 from the smaller collectors 1 and will switch off the pump 3 when the storage tank 4 is full.

Should the level in the storage tank 4 drop due to a lack of rain being collected, a low level ball cock situated in the storage tank 4 will allow water in from the mains supply to bring the water back up to an adequate level.

It is preferred that the present invention is installed at the height of the gutter system 7, with the collectors 1 and storage tank 4 being installed at approximately the same height, thus reducing the power required to pump the rainwater to a useful height, and also making full use of gravity once the water is in the storage tank.

An advantage of the present invention is that this system is intended to use a greater number of smaller and unobtrusive/discreet collectors that all feed into a larger communal tank that is kept hidden inside the roof of the building, rather than having fewer of the larger and somewhat unsightly tanks which can detract from the overall appearance of a building.

Another advantage of the present invention is that the new system can be easily installed, and can make use of an existing rain gutter, without the need for roof modifications, subterranean wells or large reservoir installations.

## Claims

1. A system for harvesting the rainwater collected from the roof of a building, comprising:
a number of rainwater collectors (1) connected to a guttering (7) attached to the roof, wherein a rainwater collector comprises a sensor (8) for detecting when a predetermined level of rainwater has been collected;
a storage tank (4); and
a feed system connecting the rainwater collectors to the storage tank;
wherein
the feed system comprises a common pumping system connected to the collectors; and
the feed system comprises means for operating the common pumping system so as to transfer water from the collectors (1) to the storage tank (4),
**characterised in that** each rainwater collector comprises a sensor (8) for detecting when a predetermined level of rainwater has been collected and water is transferred from the collectors to the storage tank only while the amount of water in each of the collectors is greater than or equal to the predetermined level.

2. A system according to claim 1 wherein the rainwater collectors are installed on gutter downpipes (11).

3. A system according to claim 2, wherein each collector comprises a sump (1 a) extending below the connection point (10) of the downpipe to the gutter, the sensor (8) of the feed system being located in the sump (1 a).

4. A system according to claim 1, 2 or 3 wherein the storage tank (4) is located in the building at a level close to that of the guttering.

5. A system according to any preceding claim, wherein the common pumping system comprises a single pump (3) and optionally a filter.

6. A system according to any preceding claim wherein the common pumping system comprises flow control valves (2a) on each of the collectors' outputs.

7. A system according to any preceding claim, wherein the feed system comprises a manifold (2) in which the water transferred from all of the collectors is combined before being passed to the storage tank (4).

8. A system according to claim 7, wherein the manifold is upstream of the common pumping system.

9. A system according to claim 8 wherein the flow control valves (2a) are situated on the input to the manifold (4).

10. A system according to any preceding claim, wherein the feed system comprises a non-return valve (9) and a strainer in each collector.

11. A system according to any preceding claim, wherein the feed system comprises a central control computer (5) which receives signals from the sensors (8) in the rainwater collectors and operates the common pumping system in accordance with the received signals.

12. A system according to claim 11, wherein the central computer and/or the sensors implement a time delay between transmission and reception of signals and operating the common pumping system.

13. A system according to any preceding claim, wherein the storage tank comprises sensors which operate to send a signal to the feed system to stop transfer of water when the storage tank is full.

14. A system according to any preceding claims, wherein the storage tank further comprises a low level ball cock to supply water from the mains supply when the level in the storage tank drops below that required.

## Patentansprüche

1. System zum Gewinnen von Regenwasser, das vom Dach eines Gebäudes gesammelt wird, Folgendes umfassend:
mehrere Regenwassersammelvorrichtungen (1), die mit am Dach angebrachten Regenrinnen (7) verbunden sind, wobei eine Regenwassersammelvorrichtung einen Sensor (8) umfasst, der erfasst, wenn eine vorgegebene Menge an Regenwasser gesammelt worden ist;
einen Speicherbehälter (4); und
ein Zulaufsystem, das die Regenwassersammelvorrichtungen mit dem Speicherbehälter verbindet;
wobei
das Zulaufsystem ein gemeinsames, mit den Sammelvorrichtungen verbundenes Pumpsystem aufweist; und
das Zulaufsystem Mittel zum Betreiben des gemeinsamen Pumpsystems aufweist, so dass Wasser von den Sammelvorrichtungen (1) zum Speicherbehälter (4) geleitet wird,
**dadurch gekennzeichnet, dass** jede Regenwassersammelvorrichtung einen Sensor (8) aufweist, der erfasst, wenn eine vorgegebene Menge an Regenwasser gesammelt worden ist, und Wasser von den Sammelvorrichtungen zum Speicherbehälter nur dann geleitet wird, wenn die Menge an Wasser in jeder der Sammelvorrichtungen größer als die vorgegebene Menge ist oder dieser entspricht.

2. System nach Anspruch 1, wobei die Regenwassersammelvorrichtungen an den Fallrohren (11) der Regenrinnen angebracht sind.

3. System nach Anspruch 2, wobei jede Sammelvorrichtung einen Sammelbehälter (1a) aufweist, der sich unterhalb des Verbindungspunkts (10) des Fallrohrs mit der Regenrinne erstreckt, wobei der Sensor (8) des Zulaufsystems im Sammelbehälter (1 a) angeordnet ist.

4. System nach Anspruch 1, 2, oder 3, wobei der Speicherbehälter (4) im Gebäude in einer Höhe nahe der Regenrinnen gelagert ist.

5. System nach einem der vorhergehenden Ansprüche, wobei das gemeinsame Pumpsystem eine einzelne Pumpe (3) und optional einen Filter aufweist.

6. System nach einem der vorhergehenden Ansprüche, wobei das gemeinsame Pumpsystem an jedem der Auslässe der Sammelvorrichtungen Durchflussregelventile (2a) aufweist.

7. System nach einem der vorhergehenden Ansprüche, wobei das Zulaufsystem einen Verteiler (2) aufweist, in dem das Wasser aus allen Sammelvorrichtungen zusammengeführt wird, bevor es in den Speicherbehälter (4) geleitet wird.

8. System nach Anspruch 7, wobei der Verteiler stromaufwärts des gemeinsamen Pumpsystems angeordnet ist.

9. System nach Anspruch 8, wobei die Durchflussregelventile (2a) am Einlass des Verteilers (4) angeordnet sind.

10. System nach einem der vorhergehenden Ansprüche, wobei das Zulaufsystem in jeder Sammelvorrichtung ein Rückschlagventil (9) und einen Filter aufweist.

11. System nach einem der vorhergehenden Ansprüche, wobei das Zulaufsystem einen zentralen Steuercomputer (5) aufweist, der Signale von den Sensoren (8) in den Regenwassersammelvorrichtungen empfängt und das gemeinsame Pumpsystem entsprechend den empfangenen Signalen betreibt.

12. System nach Anspruch 11, wobei der zentrale Computer und/oder die Sensoren eine Zeitverzögerung zwischen dem Senden und Empfangen von Signalen und dem Betreiben des gemeinsamen Pumpsystems durchführen.

13. System nach einem der vorhergehenden Ansprüche, wobei der Speicherbehälter Sensoren aufweist, die so betrieben werden, dass sie, wenn der Speicherbehälter voll ist, ein Signal an das Zulaufsystem senden, um das Weiterleiten von Wasser zu stoppen.

14. System nach einem der vorhergehenden Ansprüche, wobei der Speicherbehälter ferner einen Niedrigstand-Kugelhahn aufweist, um Wasser aus der Trinkwasserversorgung zur Verfügung zu stellen, wenn der Wasserstand im Speicherbehälter unter den erforderlichen Stand fällt.

## Revendications

1. Système de collecte de l'eau de pluie recueillie sur le toit d'un bâtiment, comprenant :
un certain nombre de collecteurs d'eau de pluie (1) raccordés à un système de gouttières (7) fixé au toit, dans lequel un collecteur de pluie comprend un capteur (8) pour détecter quand un niveau prédéterminé d'eau de pluie a été recueilli ;
un réservoir de stockage (4) ; et
un système d'alimentation raccordant les collecteurs d'eau de pluie au réservoir de stockage ;
dans lequel :
le système d'alimentation comprend un système de pompage commun raccordé aux collecteurs ; et
le système d'alimentation comprend des moyens pour actionner le système de pompage commun de manière à transférer l'eau des collecteurs (1) au réservoir de stockage (4),
**caractérisé en ce que** chaque collecteur d'eau de pluie comprend un capteur (8) pour détecter quand un niveau prédéterminé d'eau de pluie a été recueilli et l'eau n'est transférée des collecteurs au réservoir de stockage que lorsque la quantité d'eau dans chacun des collecteurs est supérieure ou égale au niveau prédéterminé.

2. Système selon la revendication 1, dans lequel les collecteurs d'eau de pluie sont installés sur des tuyauteries descendantes (11) de gouttières.

3. Système selon la revendication 2, dans lequel chaque collecteur comprend un puisard (1a) s'étendant en dessous du point de raccordement (10) de la tuyauterie descendante à la gouttière, le capteur (8) du système d'alimentation étant situé dans le puisard (1a).

4. Système selon la revendication 1, 2 ou 3, dans lequel le réservoir de stockage (4) est situé dans le bâtiment à un niveau proche de celui du système de gouttières.

5. Système selon l'une quelconque des revendications précédentes, dans lequel le système de pompage commun comprend une seule pompe (3) et éventuellement un filtre.

6. Système selon l'une quelconque des revendications précédentes, dans lequel le système de pompage commun comprend des régulateurs de débit (2a) sur chacune des sorties des collecteurs.

7. Système selon l'une quelconque des revendications précédentes, dans lequel le système d'alimentation comprend une tubulure (2) dans laquelle l'eau transférée de tous les collecteurs est combinée avant de passer au réservoir de stockage (4).

8. Système selon la revendication 7, dans lequel la tubulure est située en amont du système de pompage commun.

9. Système selon la revendication 8, dans lequel les régulateurs de débit (2a) sont situés à l'entrée dans la tubulure (4).

10. Système selon l'une quelconque des revendications précédentes, dans lequel le système d'alimentation comprend une vanne de non-retour (9) et une crépine dans chaque collecteur.

11. Système selon l'une quelconque des revendications précédentes, dans lequel le système d'alimentation comprend un ordinateur de commande central (5) qui reçoit des signaux des capteurs (8) dans les collecteurs d'eau de pluie et fait fonctionner le système de pompage commun en fonction des signaux reçus.

12. Système selon la revendication 11, dans lequel l'ordinateur central et/ou les capteurs introduisent un certain retard entre la transmission et la réception des signaux et le fonctionnement du système de pompage commun.

13. Système selon l'une quelconque des revendications précédentes, dans lequel le réservoir de stockage comprend des capteurs qui fonctionnent pour envoyer un signal au système d'alimentation afin d'arrêter le transfert d'eau lorsque le réservoir de stockage est plein.

14. Système selon l'une quelconque des revendications précédentes, dans lequel le réservoir de stockage comprend en outre un robinet à flotteur à faible niveau pour fournir de l'eau de l'alimentation générale lorsque le niveau dans le réservoir de stockage chute en dessous de celui requis.
